# EUROPÄISCHE PATENTSCHRIFT

(11) **EP 0 882 627 B1**
(45) Veröffentlichungstag und Bekanntmachung des Hinweises auf die Patenterteilung: **11.09.2002**
(21) Anmeldenummer: 98109748.8
(22) Anmeldetag: 28.05.1998
(51) Int. Cl.: B60R 21/26

(54) **Gasgenerator sowie Verfahren zum Betreiben eines Gasgenerators**
Gas generator and method of operating a gas generator
Générateur de gaz et méthode de fonctionnement d'un générateur de gaz

(30) Priorität: 03.06.1997 DE 19723259
(43) Veröffentlichungstag der Anmeldung: 09.12.1998
(73) Patentinhaber: TRW Airbag Systems GmbH & Co. KG, 84544 Aschau am Inn (DE)
(72) Erfinder: Leifheit, Markus, 85452 Moosinning (DE); Winterhalder, Marc, 84518 Garching/Alz (DE)
(74) Vertreter: Kitzhofer, Thomas, Dipl.-Ing.

(56) Entgegenhaltungen:
- EP-A- 0 741 064
- EP-A- 0 769 430
- DE-A- 19 617 674
- US-A- 3 901 530
- US-A- 5 593 180

## Beschreibung

Die Erfindung betrifft einen Hybridgasgenerator, insbesondere für Fahrzeuginsassen-Rückhaltsysteme, mit wenigstens einer Treibstoff enthaltenden Brennkammer, wenigstens einen Zündmaterial enthaltenden Zünder zum Zünden des Treibstoffs, einer mit Druckgas gefüllten Druckkammer, und einer gemeinsamen Ausströmöffnung für das Druckgas und das bei Abbrennen des Treibstoffs erzeugte heiße Gas, wobei die Ausströmöffnung durch eine bei Aktivierung des Gasgenerators zerstörbare Berstscheibe verschlossen ist, und wobei der Zünder stromaufwärts der Berstscheibe angeordnet und der Zünder von der Brennhammer und dem Treibstoff beabstandet ist.

Gasgeneratoren sollen im Rückhaltefall möglichst schnell Druckgas zum Beispiel zum Entfalten eines Gassacks oder Betätigen eines Gurtstraffers zur Verfügung stellen. Deshalb sollte die die Ausströmöffnung verschließende Berstscheibe im Rückhaltefall möglichst frühzeitig zerstört werden. Üblicherweise wird die Berstscheibe durch den Druckanstieg zerstört, der bei der Verbrennung des Treibstoffs hervorgerufen wird. Die Zeit von der Auslösung des Zünders bis zum Erreichen des vorbestimmten Drucks, der zur Zerstörung der Berstscheibe führt, ist jedoch relativ lang. Deshalb wurde in der Vergangenheit versucht, durch spezielle Maßnahmen diese Zeit zu verkürzen. Beispielsweise gibt es Gasgeneratoren, bei denen ein eigener Zünder, der nur zur Zerstörung der Berstscheibe dient, vorgesehen ist, was jedoch den Aufwand für den Gasgenerator erhöht.

In der EP 0 673 809 A1 ist ein Gasgenerator vorgesehen, der neben einer Brennkammer, in der auch der Zünder vorgesehen ist, eine mit Druckgas gefüllte Druckkammer sowie eine Mischkammer aufweist. An den Zünder grenzt eine sogenannte Booster-Ladung, die die Zündwirkung verstärken soll, und an den Booster der Treibstoff an. Eine mit Gas gefüllte Druckkammer steht mit der Brennkammer in Verbindung. Eine Mischkammer steht wiederum mit der Brenn- und der Druckkammer in Strömungsverbindung. Nach Zündung des Treibstoffes ergibt sich eine erste Druckerhöhung in der Mischkammer. Das sich auch in der Mischkammer befindliche Druckgas reagiert chemisch mit dem durch die Verbrennung des Treibstoffes erzeugten heißen Gas, wodurch der Druck in der Mischkammer den zur Zerstörung der Berstscheibe erforderlichen vorbestimmten Druck übersteigt.

Aus der EP 0 554 919 B1 ist ein Gasgenerator bekannt. Dieser hat eine Druckkammer und eine Treibsatzkammer, die im nicht aktivierten Zustand nicht miteinander verbunden sind. Die Treibsatzkammer wird durch die Berstscheibe geschlossen. Die Zündpille selbst grenzt unmittelbar an den Treibsatz, der eine Heizladung hat, an und ist mit diesem einstückig verbunden. Beim Zünden der Zündpille wird unmittelbar danach der Treibsatz gezündet. Das entstehende Gas führt zu einer Druckerhöhung in der Treibsatzkammer und zum Zerstören der Berstscheibe.

Die gattungsgemäße EP 0 741 064 A2 zeigt einen Hybridgasgenerator mit einem Zünder, einer Treibstoff enthaltenden Brennkammer und einer mit Druckgas gefüllten Druckkammer. Es ist eine Kammer vorgesehen, die mit der Brennkammer und, über ein Ventil, mit der Druckkammer in Verbindung steht. In dieser Kammer ist eine Ausströmöffnung angeordnet, die vor der Aktivierung des Gasgenerators durch eine Berstscheibe verschlossen ist. Bei der Zündung setzt die Zündladung zunächst eine Verstärkerladung in Brand, die den Abbrand des Treibstoffs initiert. Die Berstscheibe wird zerstört, sobald der durch den Abbrand von Zündladung, Verstärkerladung, Treibstoff erzeugte Druck einen vorbestimmten Wert übersteigt.

Die Erfindung schafft einen Hybridgasgenerator, der einfacher aufgebaut ist und noch schneller Gas freisetzt, als die bekannten. Dies wird bei einem Gasgenerator der eingangs genannten Art dadurch erreicht, daß der Zünder von der Brennkammer und dem Treibstoff beabstandet ist und Zünder und Berstscheihe so relativ zueinander angeordnet und in ihren pyrotechnischen beziehungsweise physikalischen Eigenschaften so aufeinander abgestimmt sind, daß die Zerstörung der Berstscheibe ausschließlich durch das Abbrennen des Zündmaterials hervorgerufen wird und daß wenigstens ein Teil einer beim Abbrand des Zündmaterials erzeugten Druckwelle unmittelbar auf die Berstscheibe gerichtet ist. Beim Stand der Technik nach der EP 0 673 809 A1 erfolgt aufgrund der in Strömungsrichtung hintereinander angeordneten Bestandteile Zünder, Booster, Treibstoff und Druckgas eine zwingende Abfolge von Reaktionen, wobei die letzte Reaktion, nämlich die chemische Reaktion in der Mischkammer erst zur Überschreitung des Grenzdrucks führt. Auch beim Gasgenerator nach der EP 0 554 919 B1 muß zum Öffnen des Gasgenerators erst der Treibsatz gezündet werden. Beim erfindungsgemäßen Gasgenerator bewirkt allein der Abbrand des Zündmaterials die Zerstörung der Berstscheibe. Da der Zünder vom Treibstoff beabstandet ist, kann er eine Doppelfunktion innehaben, nämlich den Treibsatz zu entzünden und die Berstscheibe zu öffnen. Zudem kann durch die Beabstandung des Zünders vom Treibstoff eine größere Menge von Treibstoff vorgesehen sein, denn Zünder und Treibstoff bilden keine einstückige Einheit. Wenigstens ein Teil der bei Abbrand des Zündmaterials entstehenden Druckwelle ist unmittelbar auf die Berstscheibe gerichtet, d.h. die Druckwelle kann auf kürzestem Weg, ohne Reflexion an einem Wandungsteil oder einem anderem Hindernis, zur Berstscheibe gelangen. Der Strömungsweg des bei Aktivierung des Zünders bereits entstehenden Gases bis zur Berstscheibe kann und sollte sehr kurz gehalten werden, und die zuvor erläuterten notwendigen aufeinanderfolgenden Reaktionen für die Zerstörung der Berstscheibe müssen nicht durchlaufen werden. Dadurch ergeben sich, wie Versuche gezeigt haben, kürzere Öffnungszeiten als bei bekannten Gasgeneratoren. Da der Gasgenerator nach der Erfindung sehr früh geöffnet wird, entstehen bei den nach der Öffnung ablaufenden Prozesse im Inneren des Gasgenerators keine so großen Innendrücke im Gasgenerator wie bei bislang bekannten. Die Wandungen des Gasgenerators können deshalb auch dünner ausgebildet sein, was Kosten und Gewicht spart. Ein weiterer Vorteil besteht darin, daß das Öffnungsverhalten kaum noch von der Temperatur des Gasgenerators abhängig ist, denn für die Öffnung des Gasgenerators ist die Reaktion zwischen Druckgas und dem erzeugten heißen Gas, welche stark von der Temperatur der miteinander reagierenden Gase abhängig ist, nicht mehr verantwortlich.

Die Zerstörung der Berstscheibe kann durch die bei Abbrand des Zündmaterials erzeugten heißen Gase in Verbindung mit der dabei erzeugten Druckwelle zumindest mit hervorgerufen werden. Eine andere Möglichkeit, die Zerstörung der Berstscheibe herbeizuführen, besteht darin, ein solches pyrotechnisches Zündmaterial zu verwenden, welches bei Zündung neben Gas auch heiße Partikel freiwerden läßt. Die Gasströmungsführung im Gasgenerator ist dabei zusätzlich so gewählt, daß diese heißen Partikel auf die Berstscheibe treffen und deren Zerstörung zumindest mit hervorrufen.

Die beiden vorgenannten Mechanismen zur Zerstörung der Berstscheibe können jeweils für sich oder in Kombination auftreten, was über die physikalischen und chemischen Eigenschaften des Zündmaterials sowie die physikalischen Eigenschaften der Berstmembrane und die strömungstechnischen Gegebenheiten im Inneren des Gasgenerators bestimmt werden kann.

Eine bevorzugte Ausführungsform sieht vor, daß der Zünder eine Primär- und eine Sekundärladung aufweist. Eine Booster-Ladung ist bei der bevorzugten Ausführungsform des erfindungsgemäßen Gasgenerators zur Öffnung seiner Berstscheibe nicht erforderlich, was sich positiv auf Bauraum und Kosten auswirkt.

Gemäß einer weiteren Ausgestaltung ist ein den Zünder umgebender, von diesem beabstandeter Diffusor im Inneren des Gasgenerators vorgesehen. Zwischen dem Diffusors und dem Zünder wird ein Expansionsraum für das bei Abbrand des Zündmaterials entstehende Gas gebildet. Die den Expansionsraum umgebende Diffusorwandung hat zur Berstscheibe hin wenigstens eine Durchtrittsöffnung, die einen Teil der Gasströmung, verbunden mit der sich auch in diese Richtung ausbreitenden Druckwelle, unmittelbar zur Berstscheibe gelangen läßt. Ferner sind an der Mantelfläche der Diffusorwandung Durchgangsöffnungen vorgesehen, die einen Teil des Gases zur Brennkammer lenken. Im Expansionsraum verteilt sich das heiße Gas gleichmäßig und wird teilweise von der Wandung reflektiert, bis auch der reflektierte Teil der Gasströmung durch die Durchgangsöffnungen in die Brennkammer strömt und dort zur Entzündung des Treibstoffs führt. Durch den definierten Abstand zwischen dem Treibstoff und dem Zünder ergibt sich gegenüber bekannten Gasgeneratoren ohne Booster-Ladung ein reproduzierbareres Anzündverhalten. Der in Form von Tabletten üblicherweise vorgesehene Treibstoff wird durch den sogenannten "Zünderschlag", also die erste Druckwelle bei Auslösung des Zünders, aufgrund des Diffusors nicht zerstört.

Vorzugsweise ist der Diffusor als sich vom Bereich des Bodens des Gasgeneratorgehäuses bis zum Zwischenboden erstreckende Kappe ausgebildet.

Ferner trennt der Zwischenboden gemäß einer weiteren Ausgestaltung den Expansionsraum vom Mischraum und weist im Bereich des Expansionsraums eine Durchtrittsöffnung auf, die so angeordnet und ausgerichtet ist, daß bei Abbrand des Zündmaterials erzeugtes Gas unmittelbar, ohne Ablenkung, auf die Berstscheibe trifft.

Bei Ausbildung des erfindungsgemäßen Gasgenerators als Ringgasgenerator ist dieser im wesentlichen rotationssymmetrisch aufgebaut und der Zünder, die Durchtrittsöffnung in dem Zwischenboden sowie die Berstmembrane konzentrisch zur Mittelachse angeordnet.

Gemäß einer besonders bevorzugten Ausführungsform ist die Brennkammer im nicht aktivierten Zustand zur Druckkammer offen. Das bedeutet, daß ohne Zerstörung einer Wandung die beim Verbrennen des Treibstoffs erzeugten Gase unmittelbar in die Druckkammer gelangen können und sich dort mit dem kalten Druckgas vermischen. Wenn zudem im Bereich des der Berstscheibe gegenüberliegenden Endes des Gasgenerators der Zünder und der Treibstoff vorgesehen sind und in diesem Bereich auch eine Einströmöffnung für heißes Gas in die Druckkammer vorgesehen ist, kann das heiße Gas die Druckkammer bis zur Ausströmöffnung vollständig durchströmen. Dadurch wird eine sehr starke Vermischung von heißem und kaltem Gas erreicht.

Das Druckgas und das durch den Abbrand des Treibstoffes erzeugte heiße Gas reagieren bei Vermischung vorzugsweise chemisch, indem das heiße Gas nachverbrennt, wodurch sich eine Drucksteigerung erzielen läßt.

Die Erfindung schafft ferner ein Verfahren zum Betrcihen eines Gasgenerators, der ein Gehäuse, eine Treibstoff enthaltende Brennkammer sowie eine Ausströmöffnung zum Ausströmen des erzeugten Gases aus dem Gehäuse aufweist, wobei die Ausströmöffnung durch eine bei Aktivierung des Gasgenerators zerstörbare Berstscheibe verschlossen ist, bei dem das Aktivieren des Zünders durch einen elektrischen Impuls und das Abbrennen des Zündmaterials, vorgesehen sind.

Das erfindungsgemäße Verfahren zum Betreiben eines Gasgenerators sieht folgende Schritte vor:
Zerstören der Berstscheibe ausschließlich durch wenigstens eines der folgenden Schritte unter Mithilfe der beim Abbrand des Zündmaterials entstehenden Druckwelle, die auf die Berstscheibe trifft:
   a) ein Teil des heißen Gases, das beim Abbrennen des Zündmaterials entsteht, wird unmittelbar auf die Berstscheibe gelenkt,
   b) beim Abbrand des Zündmaterials werden heiße Partikel freigesetzt, die unmittelbar auf die Berstscheibe gelenkt werden.

Weitere Merkmale und Vorteile der Erfindung ergeben sich aus der nachfolgenden Beschreibung und aus der nachfolgenden Zeichnung, auf die Bezug genommen wird.

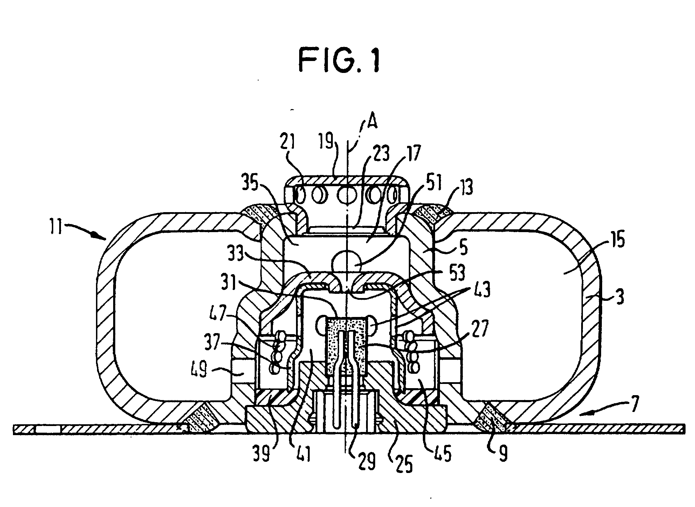

Figur 1 zeigt eine Längsschnittansicht durch eine bevorzugte Ausführungsform des erfindungsgemäßen Gasgenerators.

In Figur 1 ist ein Gasgenerator für ein Fahrzeuginsassen-Rückhaltesystem gezeigt, der als Hybrid-Ringgasgenerator ausgebildet ist und zum Aufblasen eines Fahrer-Gassacks dient. Der Gasgenerator ist zu der Mittelachse A im wesentlichen rotationssymmetrisch aufgebaut. Das Gehäuse des Gasgenerators weist eine äußere Wandung 3 und eine radial von dieser beabstandete innere Wandung 5 auf. Die äußere und die innere Wandung 3 bzw. 5 sind am bodenseitigen Ende 7 über eine Schweißnaht 9 sowie am gegenüberliegenden stirnseitigen Ende 11 über eine weitere Schweißnaht 13 gas- und druckdicht miteinander verbunden. Die innere Wandung 5 wird auch als Zuganker bezeichnet. Zwischen der äußeren und der inneren Wandung 3 bzw. 5 wird eine Druckkammer 15 gebildet, die mit Druckgas gefüllt ist. Die innere Wandung 5 trennt die Druckkammer 15 von einem radial inneren Raum, der radial von der inneren Wandung 5 begrenzt wird. Dieser Raum ist in einzelne Kammern unterteilt. Das Gehäuse weist am stirnseitigen Ende 11 die einzige Ausströmöffnung 17 für erzeugtes Gas auf, welche im nicht aktivierten Zustand durch ein kappenartiges Verschlußelement gas- und druckdicht verschlossen ist. Das kappenartige Verschlußelement umfaßt einen schuhneutralen Diffusor 19 mit radialen Bohrungen 21 sowie eine den Strömungskanal im Inneren des Diffusors 19 schließende, an die ins Innere des Gasgenerators weisende Stirnwand des Diffusors 19 angeschweißte Berstscheibe 23.

Der zentrale, von der inneren Wandung 5 begrenzte Raum ist zum bodenseitigen Ende 7 durch eine Bodenplatte 25 verschlossen. Die Bodenplatte 25 wird durch elektrisches Entladungsschweißen am übrigen Gehäuse befestigt. Ein elektrischer Zünder 27 ist, vorzugsweise durch Schweißen, in der Bodenplatte 25 gas- und druckdicht befestigt und bildet mit dieser eine vormontierte Einheit. Der Zünder umfaßt eine um den Zünddraht angeordnete Primärladung sowie eine die Primärladung umgebende Sekundärladung. Die Ladungen sind von einer Zündkappe 31 umgeben, die an die Bodenplatte 25 angeschweißt ist.

Ein deckelartig ausgebildeter Zwischenboden 33 teilt den durch die innere Wandung 5 nach außen begrenzten Raum in zwei gasdicht voneinander getrennte Räume, nämlich einen oberen Raum, der eine Mischkammer 35 darstellt, sowie einen unteren Raum. Dieser Diffusor, der zur Unterscheidung vom Diffusor 19 als Zünderdiffusor im folgenden bezeichnet wird, weist an seiner oberen Stirnwand, mit der er am Zwischenboden 33 gas- und druckdicht anliegt, eine zentrische Öffnung auf. Der Zünderdiffusor 37 ist radial über entsprechende Passungen an seiner Außenseite oder in seiner Öffnung am Zwischenboden 33 lagefixiert. Am bodenseitigen Ende des Zünderdiffusors 37 liegt dieser an einem scheibenförmigen Körper 39 aus elektrisch isolierendem, elastischen Material an. Der Körper 39 wiederum liegt auf der Bodenplatte 25 auf.

Der Zünderdiffusor 37 teilt den unteren Raum in einen radial inneren Expansionsraum 41 und eine diesen umgebenden Brennkammer 45, die über mehrere radiale Durchgangsöffnungen 43 im Zünderdiffusor 37 mit dem Expansionsraum 41 in Strömungsverbindung steht. In den Expansionsraum 41 ragt der Zünder 27, der in radialer und axialer Richtung Abstand vom Zünderdiffusor hat.

Die Brennkammer 45 ist mit Treibstoff 47 in Tablettenform befüllt und weist keine unmittelbare Verbindung zur Mischkammer 35 auf. Mehrere radiale Öffnungen 49 in der inneren Wandung 5 stellen eine Strömungsverbindung zwischen der Brennkammer 45 und der Druckkammer 15 her. Weitere Öffnungen 51, von denen nur eine gezeigt ist, in der inneren Wandung 5 stellen schließlich eine Strömungsverbindung zwischen der Druckkammer 15 und der Mischkammer 35 her. Über eine zentral angeordnete Durchtrittsöffnung 53 in dem Zwischenboden 33 wiederum ist die Mischkammer 35 mit dem Expansionsraum 41 verbunden.

Das Befüllen des Gasgenerators geschieht folgendermaßen: Zuerst wird über die bei nicht vorhandener Bodenplatte 25 vorhandene Befüllöffnung der Treibstoff 47 in die Brennkammer 45 gefüllt. Anschließend wird die Einheit aus Bodenplatte 25 mit Zünder 27 und Körper 39 aufgesetzt und die Befüllöffnung geschlossen. Bis auf die Öffnungen 49 in der inneren Wandung 5 und in dem Zünderdiffusor 37 ist die Brennkammer geschlossen, so daß, insbesondere auch aufgrund des elastischen Körpers 39, die Füllung aus Treibstoff in Tablettenform in ihrer Lage fixiert ist. Anschließend wird die Bodenplatte 25 an dem Gehäuse durch elektrisches Entladungsschweißen gas- und druckdicht befestigt. Der Körper 39 aus elektrisch isolierendem Material verhindert dabei, daß ein Kurzschlußstrom über den Zünderdiffusor 37 fließen kann.

Anschließend wird der Gasgenerator mit Druckgas über die dann als Befüllöffnung für Druckgas dienende Ausströmöffnung 17 gefüllt. Während des Befüllvorgangs ist die Einheit aus Diffusor 19 und Berstscheibe 23 nahe der Befüllöffnung angeordnet und wird vom Druckgas umströmt. Das Druckgas verbreitet sich im gesamten Inneren des Gasgenerators, also in der Mischkammer 35, im Expansionsraum 41, in der Brennkammer 45 und insbesondere in der ringförmigen, das größte Volumen einnehmenden Druckkammer 15, so daß im Inneren des Gasgenerators ein gleicher, hoher Druck herrscht. Auch der Zünder 27 ist somit druckbelastet. Anschließend wird der Diffusor 19 in die Befüllöffnung 17 am stirnseitigen Ende 11 eingesetzt und durch Kondensator-Entladungsschweißen am Gehäuse gas- und druckdicht befestigt. Der Diffusor 19 steht im montierten Zustand gegenüber dem Gehäuse axial vor.

Bei einem Unfall wird über eine nicht gezeigte Auslösesensorik der Zünder 27 aktiviert, so daß die Primär- und die Sckundärladung abbrennen und Gas erzeugen. Darüber hinaus werden beim Abbrennen der Ladungen auch heiße Partikel erzeugt. Die Zündkappe 31 ist so ausgebildet, daß sich ihre Stirnwand, die der Berstscheibe 23 zugewandt ist, zuerst öffnet und heiße Gase und Partikel mit großer Geschwindigkeit, begleitet von einer Druckwelle, in den Expansionsraum 41 eintreten. Die heißen Gase expandieren im Expansionsraum 41 gleichmäßig und verteilen sich darin. Da sich, wie gesagt, die Stirnwand aufgrund von darin vorgesehenen sternförmigen Einprägungen zuerst öffnet, ergibt sich insbesondere eine Ausbreitung in axialer Richtung, so daß die heißen Gase und heißen Partikel sich zusammen mit der Druckwelle auch teilweise durch die zur Mischkammer divergierende Durchtrittsöffnung 53 hindurchbewegen, ohne zuvor einen Teil ihrer Energie durch Aufprall auf eine Wandung oder andere Teile verloren zu haben, und unmittelbar auf die Berstscheibe 23 treffen. Der Abstand der Berstscheibe 23 von dem Zünder 27 sowie ihre physikalischen und chemischen Eigenschaften sowie die Lage und Größe der Durchtrittsöffnung 51 sind so aufeinander abgestimmt, daß die heißen Gase und die heißen Partikel verbunden mit der Druckwelle die Berstscheibe 23 zerstören. Beim Erzeugen des heißen Gases durch das Abbrennen des Zündmaterials wird es auch zu Nachreaktionen mit dem sich in der Mischkammer 35 und dem Expansionsraum 41 befindlichen Druckgas kommen, jedoch ist dies für die Zerstörung der Berstscheibe von untergeordneter Bedeutung. Durch diese Konstruktion ist ein schnelles Öffnen des Gehäuses möglich, so daß die Drücke im Inneren des Gasgenerators, die bei den anschließend auftretenden Reaktionen erzeugt werden, relativ gering gehalten werden können. Je nach Abstimmung von Zündmaterial und Berstscheibe 23 kann diese, wenn gewünscht, nur durch die heißen Partikel in Verbindung mit der beim Abbrennen des Zündmaterials entstehenden Druckwelle oder nur durch die auftreffenden heißen Gase in Verbindung mit der Druckwelle zerstört werden.

Über die freigelegte Ausströmöffnung 17 gelangt das Gas in den Strömungskanal innerhalb des einstückig ausgebildeten Diffusors 19, wird in diesem umgelenkt und verläßt über die zahlreichen Bohrungen 21, ohne daß dadurch ein Schub erzeugt wird, den Gasgenerator und strömt in den Gassack.

Die nicht über die Durchtrittsöffnung 53 ausströmenden heißen Gase und Partikel verteilen sich, wie bereits erwähnt, gleichmäßig im Expansionsraum 41, wo sie teilweise von der sie umgebenden Wandung des Zünderdiffusors 37 reflektiert werden. Über die zahlreichen radialen Durchgangsöffnungen 43 treten die Gase und heißen Partikel in die Brennkammer 45 ein, wo sie den Treibstoff 47 entzünden. Durch den Zünderdiffusor 37 wird auch verhindert, daß die sich im Inneren des Expansionsraumes 41 ausbreitende Druckwelle ungehindert in die Brennkammer 45 fortsetzt und dort zur Zerstörung der Treibstofftabletten führt. Nach dem Zünden des Treibstoffs 47 wird das entstehende heiße Gas über die Öffnungen 49 in die Druckkammer 15 strömen, sowie über die Durchgangsöffnungen 43 teilweise zurück in den Expansionsraum und von diesem über die Durchtrittsöffnung 53 in die Mischkammer. Das heiße Gas und das Druckgas sind üblicherweise so gewählt, daß bei Vermischung eine chemische Reaktion in Form einer Nachverbrennung des heißen Gases stattfindet. Eine bestmögliche Vermischung des heißen Gases mit dem Druckgas ist aus diesem Grunde erwünscht. Zusätzlich bewirkt diese Vermischung auch ein möglichst homogenes Abkühlen der heißen Gase. Damit die Vermischung der in die Druckkammer 15 einströmenden Gase erleichtert wird, sind die Öffnungen 49 vorzugsweise nicht exakt radial ausgerichtet. Vielmehr erstrecken sich die Mittelachsen der Öffnungen 49, axial gesehen, schräg zur radialen Richtung, wodurch sich in Umfangsrichtung bewegende Wirbel gebildet werden. Zusätzlich kann zur besseren Verwirbelung auch noch ein mit schrägen Leitflächen versehener Ring um die Außenseite der inneren Wandung 5 im Bereich der Öffnungen 49 vorgesehen sein. Das entstehende Gasgemisch, welches teilweise in der Druckkammer 15 nachreagiert, strömt über die Öffnungen 51 in die Mischkammer. Das heiße über die Durchtrittsöffnung 53 in die Mischkammer strömende Gas kann so auch noch mit dem Druckgas reagieren. Wichtig für die gute Vermischung ist auch, daß die Öffnungen 49 an dem unteren Ende der Druckgaskammer 15, also am den Öffnungen 51 gegenüberliegenden Ende des Gasgenerators angeordnet sind, so daß das heiße Gas die gesamte Druckkammer 15 durchschreiten muß, bevor es über die Öffnungen 51 in die Mischkammer 17 gelangt.

Die Ausführung des Gasgenerators zeichnet sich durch einen einfachen Aufbau aus, der zum Beispiel eine Booster-Ladung oder einen separaten Zünder für die Zerstörung der Berstscheibe 23 überflüssig macht.

Dadurch, daß die Zerstörung der Berstscheibe 23 ausschließlich über das Abbrennen des Zündmaterials und damit sehr schnell erfolgt, ist es möglich, die Berstscheibe 23 annähernd gleichzeitig zur Entzündung des Treibstoffes 47 zu öffnen. Aufgrund der schnellen Öffnung des Gasgenerators kommt es nur zu einer relativ geringen Drucküberhöhung im Gasgenerator selbst, was die Materialbelastung reduziert und es ermöglicht, die gesamten Wandungen relativ dünn auszulegen, wodurch Gewichts- und Kostenvorteile entstehen.

## Patentansprüche

1. Hybridgasgenerator, insbesondere für Fahrzeuginsassen-Rückhaltesysteme, mit wenigstens einer Treibstoff (47) enthaltenden Brennkammer (45), wenigstens einem Zündmaterial aufweisenden Zünder (27) zum Zünden des Treibstoffs (47), einer mit Druckgas gefüllten Druckkammer (15) und einer gemeinsamen Ausströmöffnung (17) für das Druckgas und das bei Abbrennen des Treibstoffs erzeugte heiße Gas, wobei die Ausströmöffnung (17) durch eine bei Aktivierung des Gasgenerators zerstörbare Berstscheibe (23) verschlossen ist, wobei der Zünder (27) stromaufwärts der Berstscheibe (23) angeordnet und der Zünder (27) von der Brennkammer (45) und dem Treibstoff (47) beabstandet ist, **dadurch gekennzeichnet, daß** der Zünder (27) und die Berstscheibe (23) so relativ zueinander angeordnet und in ihren physikalischen und chemischen Eigenschaften so aufeinander abgestimmt sind, daß die Zerstörung der Berstscheibe ausschließlich durch das Abbrennen des Zündmaterials hervorgerufen wird, und daß wenigstens ein Teil einer bei Abbrand des Zündmaterials erzeugten Druckwelle unmittelbar auf die Berstscheibe (23) gerichtet ist.

2. Gasgenerator nach Anspruch 1, **dadurch gekennzeichnet, daß** die Zerstörung der Berstscheibe (23) durch die bei Abbrand des Zündmaterials erzeugten heißen Gase in Verbindung mit der dabei erzeugten Druckwelle zumindest mit hervorgerufen wird.

3. Gasgenerator nach Anspruch 1 oder 2, **gekennzeichnet durch** ein solches pyrotechnisches Zündmaterial, das bei Zündung neben Gas auch heiße Partikel erzeugt, wobei die Gasströmungsführung im Gasgenerator so gewählt ist, daß die heißen Partikel auf die Berstscheibe (23) treffen und deren Zerstörung in Verbindung mit der dabei erzeugten Druckwelle zumindest mit hervorrufen.

4. Gasgenerator nach einem der vorstehenden Ansprüche, **dadurch gekennzeichnet, daß** der Gasgenerator ein rotationssymmetrischer Ringkammergasgenerator ist.

5. Gasgenerator nach einem der vorstehenden Ansprüche, **dadurch gekennzeichnet, daß** der Zünder (27) eine Primär- und eine Sekundärladung aufweist.

6. Gasgenerator nach Anspruch 5, **gekennzeichnet durch** eine Zündkappe (31), die die Primär- und die Sekundärladung umgibt und die so ausgebildet ist, daß ihr zur Berstscheibe (23) gerichteter Wandungsteil bei Aktivierung des Zünders (27) zuerst geöffnet wird.

7. Gasgenerator nach einem der vorstehenden Ansprüche, **dadurch gekennzeichnet, daß** der Treibstoff (47) ein Gas erzeugt, welches bei Vermischung mit dem Druckgas chemisch reagiert.

8. Gasgenerator nach einem der vorstehenden Ansprüche, **gekennzeichnet durch** eine Mischkammer (35), die in Gasströmungsrichtung vor der Berstscheibe (23) angeordnet ist und die mit der Druckkammer (15) über wenigstens eine Öffnung in einer inneren Wandung (5), die die Mischkammer (35) von der Druckkammer (15) trennt, in Strömungsverbindung steht.

9. Gasgenerator nach Anspruch 8, **gekennzeichnet durch** einen Zwischenboden (33), der die Mischkammer (35) von der Brennkammer (45) trennt.

10. Gasgenerator nach Anspruch 8 oder 9, **dadurch gekennzeichnet, daß** keine direkte Strömungsverbindung zwischen der Mischkammer (35) und der Brennkammer (45) vorhanden ist.

11. Gasgenerator nach einem der Ansprüche 8 bis 10, **dadurch gekennzeichnet, daß** die Mischkammer (35) unmittelbar vor der Berstscheibe (23) angeordnet ist und der Zünder (27) an einem zur Berstscheibe (23) gegenüberliegenden Ende des Gasgenerators und außerhalb der Mischkammer (35) angeordnet ist.

12. Gasgenerator nach einem der vorstehenden Ansprüche, **gekennzeichnet durch** einen den Zünder (27) umgebenden, von diesem beabstandeten Diffusor (37), in dessen Innerem ein Expansionsraum (41) für das bei Abbrand des Zündmaterials entstehende Gas gebildet ist.

13. Gasgenerator nach Anspruch 12, **dadurch gekennzeichnet, daß** der Diffusor (37) die ringförmige Brennkammer (45) vom Expansionsraum (41) trennt und wenigstens eine Durchgangsöffnung (43) in der Diffusorwandung vorgesehen ist, über die erzeugtes Gas vom Expansionsraum (41) in die Brennkammer (45) strömt.

14. Gasgenerator nach Anspruch 12 oder 13, **dadurch gekennzeichnet, daß** der Diffusor (37) als sich vom Bereich des Bodens des Gasgeneratorgehäuses bis wenigstens annähernd zum Zwischenboden (33) erstreckende Kappe ausgebildet ist.

15. Gasgenerator nach Anspruch 13, **dadurch gekennzeichnet, daß** der Zwischenboden (33) den Expansionsraum (41) von der Mischkammer (35) trennt und im Bereich des Expansionsraums (41) wenigstens eine Durchtrittsöffnung (53) aufweist, die so angeordnet und ausgerichtet ist, daß bei Abbrand des Zündmaterials erzeugtes Gas unmittelbar, ohne Ablenkung auf die Berstscheibe (23) trifft.

16. Gasgenerator nach Anspruch 15, **dadurch gekennzeichnet, daß** der Zünder (27), die Durchtrittsöffnung (53) in dem Zwischenboden (33) und die Berstscheibe (23) konzentrisch zur Mittelachse angeordnet sind.

17. Gasgenerator nach Anspruch 16, **dadurch gekennzeichnet, daß** der Expansionsraum (41) in radialer Richtung von der Brennkammer (45) umgeben ist, daß sich an den Expansionsraum (41) die Mischkammer (35) in axialer Richtung anschließt und Mischkammer (35) und Brennkammer (45) in radialer Richtung von der Druckkammer (15) umgeben sind.

18. Gasgenerator nach einem der vorstehenden Ansprüche, **dadurch gekennzeichnet, daß** die Brennkammer (45) im nicht aktivierten Zustand zur Druckkammer (15) offen ist.

19. Verfahren zum Betreiben eines Gasgenerators, der ein Gehäuse, eine Treibstoff (47) enthaltende Brennkammer (45), eine mit Druckgas gefüllte Druckkammer (15) sowie einen Zünder (27) zum Anzünden des Treibstoffs (47) und eine gemeinsame Ausströmöffnung (17) für das Druckgas und das beim Abbrennen des Treibstoffs (47) erzeugte Gas aufweist, über die das erzeugte Gas aus dem Gehäuse austritt, wobei die Ausströmöffnung (17) durch eine bei Aktivierung des Gasgenerators zerstörbare Berstscheibe (23) verschlossen ist, bei dem der Zünder (27) durch einen elektrischen Impuls aktiviert und das Zündmaterial abgebrannt wird, **dadurch gekennzeichnet, daß** die Berstscheibe (23) ausschließlich durch wenigstens einen der folgenden Schritte unter Mithilfe der beim Abbrand des Zündmaterials entstehenden Druckwelle, die auf die Berstscheibe (23) trifft, zerstört wird:
a) ein Teil des heißen Gases, das beim Abbrennen des Zündmaterials entsteht, wird unmittelbar auf die Berstscheibe (23) gelenkt,
b) beim Abbrand des Zündmaterials werden heiße Partikel freigesetzt, die unmittelbar auf die Berstscheibe (23) gelenkt werden.

20. Verfahren nach Anspruch 19, **dadurch gekennzeichnet, daß** ein Teil des heißen Gases zum Treibstoff gelangt und diesen entzündet und daß das beim Abbrennen des Treibstoffs entstehende Gas ohne Zerstörung von Wandungen in die Druckkammer gelangt und sich mit dem kalten Druckgas vermischt.

## Claims

1. A hybrid gas generator, in particular for vehicle occupant restraint systems, with at least one combustion chamber (45) containing propellant (47), with at least one igniter (27) for igniting the propellant (47), the igniter comprising ignition material, with a pressure chamber (15) filled with compressed gas, and with a common outflow opening (17) for the compressed gas and for the hot gas generated on deflagration of the propellant, the outflow opening (17) being closed by a bursting disc (23) able to be destroyed on activation of the gas generator, the igniter (27) being arranged upstream of the bursting disc (23) and the igniter (27) being spaced apart from the combustion chamber (45) and the propellant (47), **characterized in that** the igniter (27) and the bursting disc (23) are arranged relative to each other in such a manner and are adapted to each other in their physical and chemical properties such that the destruction of the bursting disc is exclusively caused by the deflagration of the ignition material, and that at least a portion of a blast wave generated on deflagration of the ignition material is directed immediately onto the bursting disc (23).

2. The gas generator according to Claim 1, **characterized in that** the hot gases produced on deflagration of the ignition material, in combination with the blast wave generated therewith, at least contribute to the destruction of the bursting disc (23).

3. The gas generator according to Claim 1 or 2, **characterized by** a pyrotechnic ignition material of such a type which in addition to gas also produces hot particles on ignition, the gas flow guidance in the gas generator being designed such that the hot particles strike the bursting disc (23) and at least contribute to its destruction in combination with the blast wave produced therewith.

4. The gas generator according to any of the preceding claims, **characterized in that** the gas generator is a rotationally symmetrical ring chamber gas generator.

5. The gas generator according to any of the preceding claims, **characterized in that** the igniter (27) has a primary and a secondary charge.

6. The gas generator according to Claim 5, **characterized by** an ignition cap (31) which surrounds the primary and the secondary charge and which is constructed such that its wall part directed towards the bursting disc (23) is opened first on activation of the igniter (27).

7. The gas generator according to any of the preceding claims, **characterized in that** the propellant (47) produces a gas which reacts chemically with the compressed gas on mixing.

8. The gas generator according to any of the preceding claims, **characterized by** a mixing chamber (35) which in the gas flow direction is arranged upstream of the bursting disc (23) and which is in flow connection with the pressure chamber (15) via at least one opening in an inner wall (5), which separates the mixing chamber (35) from the pressure chamber (15).

9. The gas generator according to Claim 8, **characterized by** an intermediate base (33) which separates the mixing chamber (35) from the combustion chamber (45).

10. The gas generator according to Claim 8 or 9, **characterized in that** no direct flow connection is present between the mixing chamber (35) and the combustion chamber (45).

11. The gas generator according to any of Claims 8 to 10, **characterized in that** the mixing chamber (35) is arranged immediately upstream of the bursting disc (23) and the igniter (27) is arranged at an end of the gas generator opposite to the bursting disc (23) and outside of the mixing chamber (35).

12. The gas generator according to any of the preceding claims, **characterized by** a diffusor (37) surrounding the igniter (27) and spaced apart therefrom, in the interior of which diffusor (37) an expansion chamber (41) is formed for the gas developing on deflagration of the ignition material.

13. The gas generator according to Claim 12, **characterized in that** the diffusor (37) separates the annular combustion chamber (45) from the expansion chamber (41) and that at least one passage opening (43) is provided in the diffusor wall, via which generated gas flows from the expansion chamber (41) into the combustion chamber (45).

14. The gas generator according to Claim 12 or 13, **characterized in that** the diffusor (37) is constructed as a cap extending from the region of the base of the gas generator housing to at least close to the intermediate base (33).

15. The gas generator according to Claim 13, **characterized in that** the intermediate base (33) separates the expansion chamber (41) from the mixing chamber (35) and has at least one through opening (53) in the region of the expansion chamber (41), which through opening (53) is arranged and oriented such that gas produced on deflagration of the ignition material strikes directly onto the bursting disc (23) without deflection.

16. The gas generator according to Claim 15, **characterized in that** the igniter (27), the through opening (53) in the intermediate base (33) and the bursting disc (23) are arranged concentrically to the central axis.

17. The gas generator according to Claim 16, **characterized in that** the expansion chamber (41) is surrounded by the combustion chamber (45) in the radial direction, that the mixing chamber (35) adjoins the expansion chamber (41) in the axial direction, and that the mixing chamber (35) and the combustion chamber (45) are surrounded by the pressure chamber (15) in the radial direction.

18. The gas generator according to any of the preceding claims, **characterized in that** in the non-activated condition the combustion chamber (45) is open towards the pressure chamber (15).

19. A method for operating a gas generator, which has a housing, a combustion chamber (45) containing propellant (47), a pressure chamber (15) filled with compressed gas, and an igniter (27) for igniting the propellant (47), and a common outflow opening (17) for the compressed gas and for the gas generated on deflagration of the propellant (47), via which the generated gas emerges from the housing, the outflow opening (17) being closed by a bursting disc (23) which is able to be destroyed on activation of the gas generator, in which method the igniter (27) is activated by an electric impulse and the ignition material deflagrates, **characterized in that** the bursting disc (23) is destroyed exclusively by at least one of the following steps with the aid of the blast wave developing on deflagration of the ignition material, which blast wave strikes onto the bursting disc (23):
a) a portion of the hot gas which is generated on deflagration of the ignition material is directed immediately onto the bursting disc (23),
b) on deflagration of the ignition material, hot particles are released which are directed immediately onto the bursting disc (23).

20. The method according to Claim 19, **characterized in that** a portion of the hot gas reaches the propellant and ignites it, and that the gas developing on deflagration of the propellant reaches the pressure chamber without destroying walls and mixes with the cold compressed gas.

## Revendications

1. Générateur de gaz hybride, en particulier pour systèmes de retenue de passagers, comportant au moins une chambre de combustion (45) contenant du combustible (47), au moins une amorce (27) présentant un matériau d'amorçage pour amorcer le combustible (47), une chambre de pression (15) remplie de gaz sous pression et un orifice d'échappement (17) commun pour le gaz sous pression et pour le gaz chaud engendré au brûlage du combustible, l'orifice d'échappement (17) étant fermé par une plaque de rupture (23) destructible lors de l'activation du générateur de gaz, l'amorce (27) étant agencée en amont de la plaque de rupture (23), et l'amorce (27) étant espacée de la chambre de combustion (45) et du combustible (47), **caractérisé en ce que** l'amorce (27) et la plaque de rupture (23) sont agencées l'une par rapport à l'autre et adaptés l'une à l'autre du point de vue de leurs propriétés physiques et chimiques de telle sorte que la destruction de la plaque de rupture est causée exclusivement par le brûlage du matériau d'amorçage, et **en ce qu'**au moins une partie de l'onde de choc produite au brûlage du matériau d'amorçage est orientée directement sur la plaque de rupture (23).

2. Générateur de gaz selon la revendication 1, **caractérisé en ce que** la destruction de la plaque de rupture (23) par les gaz chauds produits lors du brûlage du matériau d'amorçage est causée au moins conjointement avec l'onde de choc alors produite.

3. Générateur de gaz selon la revendication 1 ou 2, **caractérisé par** un matériau d'amorçage pyrotechnique tel qu'à l'amorçage, des particules chaudes sont engendrées en plus du gaz, l'amenée d'écoulement de gaz dans le générateur de gaz étant choisie tel que les particules chaudes frappent la plaque de rupture (23) et causent sa destruction au moins conjointement avec l'onde de choc alors produite.

4. Générateur de gaz selon l'une des revendications précédentes, **caractérisé en ce que** le générateur de gaz est un générateur de gaz à chambre annulaire à symétrie de révolution.

5. Générateur de gaz selon l'une des revendications précédentes, **caractérisé en ce que** l'amorce (27) présente une charge primaire et une charge secondaire.

6. Générateur de gaz selon la revendication 5, **caractérisé par** une calotte d'amorce (31) qui entoure la charge primaire et la charge secondaire et qui est réalisée de manière telle que sa partie de paroi orientée vers la plaque de rupture (23) est ouverte en premier lors de l'activation de l'amorce (27).

7. Générateur de gaz selon l'une des revendications précédentes, **caractérisé en ce que** le combustible (47) engendre un gaz qui réagit chimiquement lorsqu'il est mélangé au gaz sous pression.

8. Générateur de gaz selon l'une des revendications précédentes, **caractérisé par** une chambre de mélange (35) qui est agencée en amont de la plaque de rupture (23) en direction d'écoulement de gaz et qui communique avec la chambre de pression (15) via au moins une ouverture dans une paroi intérieure (5) qui sépare la chambre de mélange (35) de la chambre de pression (15).

9. Générateur de gaz selon la revendication 8, **caractérisé par** un fond intermédiaire (33) qui sépare la chambre de mélange (35) de la chambre de combustion (45).

10. Générateur de gaz selon la revendication 8 ou 9, **caractérisé en ce qu'**il n'y a pas de liaison d'écoulement directe entre la chambre de mélange (35) et la chambre de combustion (45).

11. Générateur de gaz selon l'une des revendications 8 à 10, **caractérisé en ce que** la chambre de mélange (35) est agencée directement en amont de la plaque de rupture (27) et **en ce que** l'amorce (27) est agencée à une extrémité du générateur de gaz qui est opposée à la plaque de rupture (23) et en dehors de la chambre de mélange (35).

12. Générateur de gaz selon l'une des revendications précédentes, **caractérisé par** un diffuseur (37) entourant l'amorce (27) et espacé de celle-ci, à l'intérieur duquel est formée une chambre d'expansion (41) pour le gaz engendré lors du brûlage du matériau d'amorçage.

13. Générateur de gaz selon la revendication 12, **caractérisé en ce que** le diffuseur (37) sépare la chambre de combustion (45) annulaire de la chambre d'expansion (41) et **en ce qu'**il est prévu au moins une ouverture de passage (43) dans la paroi du diffuseur, par laquelle le gaz engendré l'écoule depuis la chambre d'expansion (41) jusque dans la chambre de combustion (45).

14. Générateur de gaz selon la revendication 12 ou 13, **caractérisé en ce que** le diffuseur (37) est réalisé sous forme de calotte s'étendant depuis la zone du fond du boîtier du générateur de gaz jusqu'au moins approximativement vers le fond intermédiaire (33).

15. Générateur de gaz selon la revendication 13, **caractérisé en ce que** le fond intermédiaire (33) sépare la chambre d'expansion (41) de la chambre de mélange (35) et présente dans la région de la chambre d'expansion (41) au moins une ouverture de traversée (53) qui est agencée et orientée de telle sorte que le gaz engendré lors du brûlage du matériau d'amorçage frappe la plaque de rupture (23) sans être dévié.

16. Générateur de gaz selon la revendication 15, **caractérisé en ce que** l'amorce (27), l'ouverture de traversée (53) dans le fond intermédiaire et la plaque de rupture (23) sont agencées concentriquement à l'axe médian.

17. Générateur de gaz selon la revendication 16, **caractérisé en ce que** la chambre d'expansion (41) est entourée en direction radiale par la chambre de combustion (45), **en ce que** la chambre de mélange (35) se raccorde en direction axiale à la chambre d'expansion (41) et **en ce que** la chambre de mélange (35) et la chambre de combustion (45) sont entourées en direction radiale par la chambre de pression (15).

18. Générateur de gaz selon l'une des revendications précédentes, **caractérisé en ce qu'**à l'état non activé, la chambre de combustion (45) est ouverte vers la chambre de pression (15).

19. Procédé de fonctionnement d'un générateur de gaz qui présente un boîtier, une chambre de combustion (45) contenant du combustible (47), une chambre de pression (15) remplie de gaz sous pression ainsi qu'une amorce (27) pour amorcer le combustible (47) et un orifice d'échappement (17) commun pour le gaz sous pression et pour le gaz engendré au brûlage du combustible (47), via lequel le gaz engendré sort du boîtier, l'orifice d'échappement (17) étant fermé par une plaque de rupture (23) destructible lors de l'activation du générateur de gaz, procédé dans lequel l'amorce (27) est activée par une impulsion électrique et le matériau d'amorçage est brûlé, **caractérisé en ce que** la plaque de rupture (23) est détruite exclusivement par au moins une des étapes suivantes avec le concours de l'onde de choc produite au brûlage du matériau d'amorçage et qui frappe la plaque de rupture (23)
a) une partie du gaz chaud qui est engendré au brûlage du matériau d'amorçage est dirigé directement sur la plaque de rupture (23),
b) au brûlage du matériau d'amorçage sont dégagées des particules chaudes qui sont dirigées directement sur la plaque de rupture (23).

20. Procédé selon la revendication 19, **caractérisé en ce que** une partie du gaz chaud parvient au combustible et l'enflamme et **en ce que** le gaz engendré au brûlage du combustible parvient dans la chambre de pression sans détruire de parois et se mélange au gaz sous pression froid.
